# EUROPÄISCHE PATENTSCHRIFT

(11) **EP 2 713 345 B1**
(45) Veröffentlichungstag und Bekanntmachung des Hinweises auf die Patenterteilung: **24.08.2016**
(21) Anmeldenummer: 12186008.4
(22) Anmeldetag: 26.09.2012
(51) Int. Cl.: G07F 7/10, G06F 21/36

(54) **VERFAHREN UND SYSTEM ZUR GESICHERTEN EINGABE VON IDENTIFIZIERUNGSDATEN FÜR DIE AUTHENTIFIZIERUNG EINER MITTELS EINES SELBSTBEDIENUNGSTERMINALS DURCHGEFÜHRTEN TRANSAKTION**
METHOD AND SYSTEM FOR THE SECURE INPUT OF IDENTIFYING DATA FOR AUTHENTICATING A TRANSACTION PERFORMED BY MEANS OF A SELF-SERVICE TERMINAL
PROCÉDÉ ET SYSTÈME DE SAISIE SÉCURISÉE DE DONNÉES D'IDENTIFICATION POUR L'AUTHENTIFICATION D'UNE TRANSACTION MENÉE AU MOYEN D'UN TERMINAL EN LIBRE-SERVICE

(43) Veröffentlichungstag der Anmeldung: 02.04.2014
(73) Patentinhaber: Wincor Nixdorf International GmbH, 33106 Paderborn (DE)
(72) Erfinder: Urban, Patrick, 33102 Paderborn (DE)

(56) Entgegenhaltungen:
- WO-A1-2004/057516
- WO-A2-2007/091869
- DE-A1-102007 043 843
- GB-A- 2 457 733
- US-A1- 2008 222 048
- US-A1- 2012 047 564

## Beschreibung

Die Erfindung betrifft ein Verfahren zur gesicherten Eingabe von Identifizierungsdaten für die Authentifizierung einer Transaktion nach dem Oberbegriff des Verfahrensanspruchs 1 sowie ein zur Durchführung des Verfahrens geeignetes System nach dem Oberbegriff des nebengeordneten Vorrichtungsanspruchs.

Im Bereich des Automaten-gestützten Zahlungsverkehrs sind Verfahren und Selbstbedienungsterminals (auch kurz SB-Terminals genannt) der eingangs genannten Art hinlänglich bekannt. Als typische Beispiele für solche Selbstbedienungsterminals sind Geldautomaten zu nennen, die in Banken, Einkaufszentren usw. aufgestellt sind und es einem Benutzer ermöglichen durch Verwenden seiner Bankkarte, jederzeit Geld von seinem Konto abzuheben und sich bar auszahlen zu lassen. Auch sind SB-Terminals bekannt, die andere Transaktionen, wie z.B. die Überweisung von Geldbeträgen und/oder die Einzahlung von Bargeld ermöglichen. Um eine Transaktion gegen Missbrauch abzusichern, wird üblicherweise eine Authentifizierung mittels Identifizierungsdaten, insbesondere mittels einer sog. PIN (Personal Identification Number), durchgeführt, welcher der Bankkarte zugeordnet sind bzw. ist und welche der Benutzer am Geldautomaten korrekt eingeben muss. Hierzu verfügen die üblichen Geldautomaten und sonstigen SB-Terminals über ein Tastenfeld, das sog. EPP (Encrypting PIN Pad), welches die eingegebene PIN verschlüsselt an die Einheit(en), insbesondere an einen zentrale Server, überträgt, der die Authentifizierung durchführt.

In der Vergangenheit wurde bei der Konzeption von Geldautomaten häufig Wert auf hochwertige Komponenten und reichhaltige Ausstattung gelegt, was jedoch mit höheren Herstellungskosten einherging. Heutzutage zeichnet sich ein Trend hin zu kostengünstigeren Lösungen ab, insbesondere für den Einsatz in Schwellenländern und Wachstumsmärkten, wie den sog. "BRIC"-Staaten. Hier werden überwiegend Low-Cost-Systeme nachgefragt, d.h. SB-Terminals, welche möglichst preiswert gefertigt sind, aber die erforderlichen Anforderungen bezüglich der Sicherheit u.ä. bieten sollen. Für den Hersteller wirft die Produktion (Verwendung kostengünstigerer Komponenten, Bezug von billigeren Lieferanten, Optimierung des Fertigungsprozesses, etc.) oftmals nur sehr geringen Profit ab. Zudem besteht die Gefahr, dass die Produkt-Qualität, Benutzerfreundlichkeit und Sicherheit in Mitleidenschaft gezogen wird. Daher sind alternative Lösungen erwünscht, die zwar niedrige Produktionskosten ermöglichen, ohne jedoch Einbußen bei der Qualität, Benutzerfreundlichkeit und Sicherheit hinnehmen zu müssen. Dabei gehört zur Sicherheit dazu, dass auch weiterhin ein Verfahren zur gesicherten Eingabe von Identifizierungsdaten für die Authentifizierung einer Transaktion durchgeführt werden kann.

In der US 2012/0047564 A1 wird ein Sicherheits-System und Verfahren zur gesicherten Eingabe von Identifizierungsdaten in Form einer dem Benutzer bzw. Kunden zugeordneter PIN (Personal Identification Number) beschrieben, um Transaktionen über das Internet abzuwickeln, die im Zusammenhang mit der Online-Bezahlung von Warenbestellungen und Nutzung von kostenpflichtigen Diensten stehen (s. dort [0002]). Für die Eingabe der PIN wird anstelle der üblichen Tastatur mit normaler Tasten-Anordnung, ein sog. "scrambled keypad" mit einer durcheinander gebrachten bzw. verwürfelten Tasten-Anordnung generiert und über eine SMS-Mobilkommunikation an ein mobiles Benutzer-Endgerät gesendet (s. dort [0060], [0062-63] und [0065] sowie Fig. 5). Dem Benutzer wird dann über die Internet-Bezahl-Anwendung auf seinem PC oder an seinem mobilen Endgerät aufgefordert seine PIN entsprechend der verwürfelten Tasten-Anordnung einzugeben, wobei dem Benutzer die übliche Tastatur (Fig. 6) oder eine blanke Tastatur (Fig. 7) angeboten wird (s. [0067-68]). Hierdurch wird verhindert, dass die wahre PIN bei Betätigung der Tastatur (Fig. 6 oder Fig. 7) von Fremden ausspioniert werden kann. Jedoch muss sichergestellt werden, dass die Verwürfelung der Tasten auch möglichst alle diejenigen Tasten betrifft, die für die jeweilige PIN benutzt werden müssen, also die für die PIN-Eingabe relevanten Tasten betrifft. Andernfalls kann es passieren, dass trotz Verwürfelung die relevanten Tasten an ihrer normalen Position verbleiben und ein Fremder die wahre PIN ausspähen kann.

WO 2004/057516 A1 offenbart eine Vorrichtung und ein Verfahren zur Eingabe von Passwörtern in einen Geldautomaten, einem Türschloss und dergleichen, wobei die Vorrichtung eine Anzeige bzw. ein Display mit Tastenfeld aufweist, wo Nummern oder Buchstaben für Passwörter zufällig angeordnet werden. Der Nutzer kann dann anstelle von Passwort-Nummern, Passwort-Buchstaben eingeben.

DE 10 2007 043843 A1 offenbart ein Verfahren zur abhörsicheren Übertragung einer Zeichenreihe von einem Klienten durch ein Rechnernetz zum Server eines Online-Accounts. Für eine abhörsichere Übertragung der Zeichenreihe (Passworts bzw. PIN) werden die folgenden Schritte ausgeführt: a) Erzeugen eines Bildes mit Schaltflächen, die nach dem Zufallsprinzip mit Zeichen beschriftet werden, durch den Server, b) Zustellung des in a) erzeugten Bildes an den Klienten, c) Erzeugen eines Bildes mit Schaltflächen, die ähnlich angeordnet sind wird die in a) erzeugten Schaltflächen, jedoch ohne Beschriftung sind, d) Anzeigen des in c) erzeugten Bildes auf dem Bildschirm des Klienten, wobei die Schaltflächen des Bildes aktivierbar sind, e) Eingabe einer Reihe von n Zeichen durch den Klienten via n Aktivierungen von unbeschrifteten Schaltflächen am Bildschirm, indem für jedes Zeichen der Nachricht die unbeschriftete Schaltfläche aktiviert wird, die der Schaltfläche entspricht, die im zugestellten Bild mit diesem Zeichen beschriftet ist, f) Übertragung der Information darüber, welche Bildpositionen der Klient in welcher Reihenfolge aktiviert hat, zum Server, und g) Rekonstruktion der vom Klienten eingegebenen Zeichenreihe durch den Server.

GB 2 457 733 A offenbart ein Verfahren zur Sicherung der Eingabe von vertraulichen Informationen durch einen Benutzer, wobei das Verfahren folgende Schritte umfasst: Erzeugen einer Zuordnung, die jedes Symbol aus einer Vielzahl von Symbolen mit einer jeweiligen Stelle bzw. Position verknüpft, an der es auf einer Anzeige bzw. einem Display angezeigt werden soll, und Anzeigen der Vielzahl von Symbolen für den Benutzer. Von dem Benutzer wird eine Reihenfolge von Auswahlen bereitgestellt, wobei jede Auswahl eine Auswahl einer entsprechenden Stelle / Position darstellt. Dann erfolgt ein Umwandeln der Reihenfolge der Auswahlen in einer entsprechenden Folge von Eingangs-Symbolen, welche die Eingabe des Benutzerw darstellen. Die Zuordnung von Symbolen mit den Stellen bzw. Positionen auf der Anzeige kann zufällig erfolgen.

WO 2007/091869 A2 offenbart ein Benutzerauthentifizierungs-System und ein Verfahren, bei dem ein sog. OTP-Token (One-Time Password Token) zum Einsatz kommt. Der Benutzer stellt ein Abbild-Passwort als einen festen Schlüssel ein; ein Abfragegerät gibt einen Abfragebildschirm aus, auf dem ein erzeugtes OTP in Teile zerlegt wird, passend zu den Abbildern des festen Schlüssels. Der Benutzer, welcher den Abfragebildschirm bestätigt, gibt sequentiell die Nummern ein, die zu dem Abbild-Passwort passen, d.h. der feste Schüssel des Benutzers und das Ergebnis der Benutzerauthentifizierung werden abhängig davon verarbeitet, ob die eingegeben Nummern zu den Antwortwerten passen, die der Server vorbereitet hat.

US 2008/0222048 A1 offenbart ein Zahlungssystem, bei dem eine Mobilkommunikations-Vorrichtung mit einer Handels-Verarbeitungs-Einrichtung und einer Zahlungsmaschine (payment engine) interagieren kann. Eine Kommunikations-Komponente, die mit der Zahlungsmaschine verbunden ist, kann angeforderte Barcodes zu der Mobilkommunikations-Vorrichtung senden, kann Barcodes oder alphanumerische Universal-Produkt-Kodes von Kunden-Mobilkommunikations-Vorrichtungen empfangen, und kann Zahlungs-Authorisierungen und -Abwicklungen bearbeiten. Eine Barcode-Management-Komponente kann Barcodes generieren und interpretieren basierend auf Kaufangeboten und Kunden-Anfragen. Eine Sicherheits-Algorithmus-Komponente kann einen Offset-Pair-Algorithmus verwenden, um jede Ziffer bzw. jedes Digit aus einer Zahlkarten-Information in ein Offset-Paar von Ziffern umzuwandeln, um die Sicherheit in Übereinstimmung mit einer Ausführungsform der vorliegenden Erfindung zu verbessern.

In der US 2012 / 0160912 A1 wird ein Geldautomat, kurz ATM genannt, beschrieben, der auch mittels eines mobilen Benutzer-Endgeräts bedient werden kann. Dabei handelt es sich um das Smartphone des Benutzers bzw. Bankkunden, das mit einer Kamera ausgestattet ist, um grafische Codes vom Bildschirm des ATM zu scannen. Ferner ist auf dem Smartphone ein kleines Anwendungsprogramm (sog. App) installiert, das/die über eine mobile Kommunikationsverbindung mit dem Transaktions-Management-System es dem Benutzer ermöglicht, Transaktionen am ATM auszuführen, ohne die Bankkarte in den Kartenleser des Geldautomaten einführen zu müssen. Der Benutzer authentifiziert sich über sein Smartphone und veranlasst z.B. eine Geldauszahlung, indem er mit Hilfe des Smartphone einen auf dem ATM-Bildschirm angezeigten Barcode abscannt, der sich auf die Transaktion bezieht, und den das Smartphone an das Transaktions-Management-System sendet. Hierdurch kann das Transaktions-Management-System nicht nur die Authentifizierung des Benutzers prüfen, sondern auch feststellen, dass der Benutzer sich an dem ATM befindet, der in die Transaktion (z.B. Geldausgabe) eingebunden ist. Demnach könnte bei dem dort beschriebenen Geldautomat der Kartenleser prinzipiell eingespart werden. Wie dort im Textabschnitt [0049] beschrieben wird, kann zur Freigabe einer Transaktion es weiterhin erforderlich sein, dass der Benutzer an der Tastatur des ATM oder an seinem Smartphone Identifizierungsdaten in Form der sog. PIN (Personal Identification Number) eingeben muss. Das Problem des Ausspähens von solchen sensitiven Daten durch Dritte wird dort nicht behandelt.

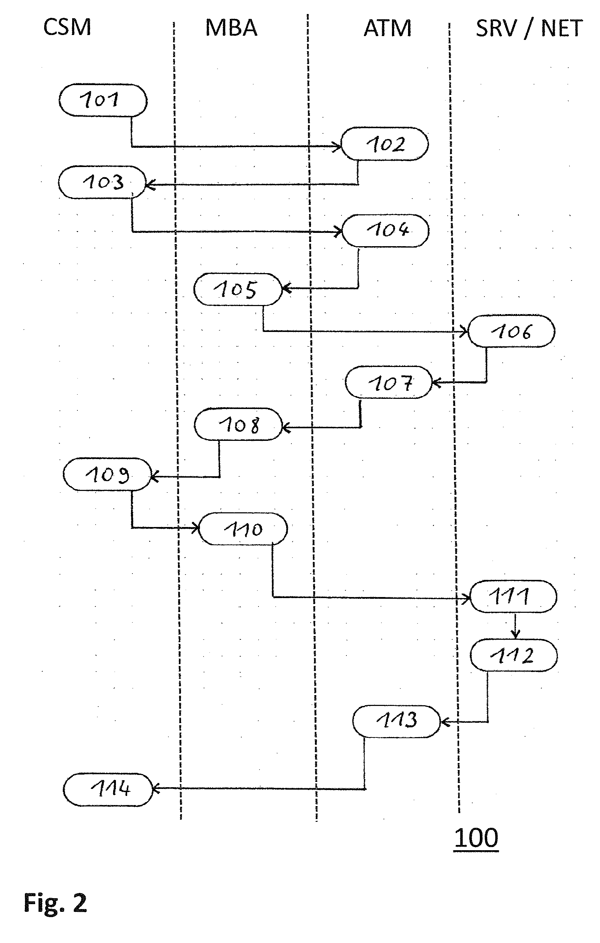

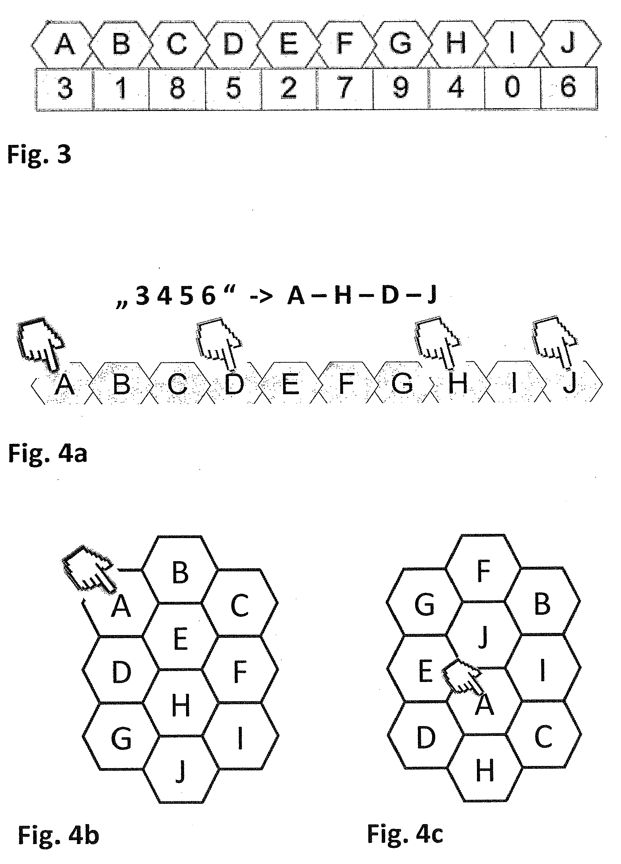

Die US 6,549,194 B1 beschreibt ein Verfahren zur sicheren Eingabe von Identifizierungsdaten an festen oder mobilen Endgeräten. Dort (s. Fig. 2a-d und Fig. 3a-d) wird ein berührungsempfindlicher Bildschirm, ein sog. Touch-PAD, beschrieben, welches ein dynamisch veränderbares Layout aufweist, bei dem sich die räumliche Verteilung der Soft-Tasten auf dem Touch-PAD ändern kann. Demnach ändert sich die Anordnung der Zifferntasten und somit wird das Ausspähen von PIN-Eingaben erschwert.

Die US 6,434,702 B1 (s. Fig. 1 und 2) beschreibt auch ein sich änderndes Tastatur-Layout für ein Tastenfeld mit Ziffernblock, wobei jedoch der Layout-Rahmen fest bestehen bleibt und sich nur die Reihenfolge der angezeigten Ziffern ändert. Das dort gezeigte Tastenfeld (Pad) kann z.B. das Touch Pad eines Geldautomaten sein (s. Text, Spalte 1, Zeilen 29-31).

Aufgabe der Erfindung ist es ein Verfahren und ein danach arbeitendes System vorzuschlagen, die zur gesicherten Eingabe von Identifizierungsdaten für die Authentifizierung einer Transaktion, die mittels eines Selbstbedienungsterminals durchgeführt wird, geeignet sind, und die das Ausspähen der Identifizierungsdaten unmöglich machen oder zumindest deutlich erschweren.

Gelöst wird die Aufgabe durch ein Verfahren mit den Merkmalen des Anspruchs 1 und durch ein nach dem Verfahren arbeitendes System mit den Merkmalen des nebengeordneten Anspruchs.

Demnach wird ein Verfahren zur gesicherten Eingabe von Identifizierungsdaten für die Authentifizierung einer Transaktion, die mittels eines Selbstbedienungsterminals durchgeführt wird, mit den folgenden Schritten vorgeschlagen:
zu einer ersten Datenmenge mit ersten Elementen, insbesondere Ziffern, aus denen die Identifizierungsdaten, insbesondere die PIN, gebildet werden, wird mittels einer ersten rechnergestützten Einheit eine zweite Datenmenge mit zweiten Elementen, insbesondere Buchstaben und/oder Symbolen, gebildet, welche jeweils einem der ersten Elemente eineindeutig zugeordnet sind, wodurch aus den zweiten Elementen Eingabedaten erzeugbar sind, die einer bijektiven Abbildung der Identifizierungsdaten entsprechen, wobei die zweiten Elemente verschieden von den ersten Elementen sind und wobei die Zuordnung der zweiten Datenmenge zu der ersten Datenmenge mittels einer Pseudo-Zufalls-Zuordnung der zweiten Elemente zu den ersten Elementen vor jeder Durchführung einer neuen Transaktion erneut gebildet wird;
die eineindeutige Zuordnung der zweiten Elemente zu den ersten Elementen wird auf einem Bildschirm angezeigt, der baulich mit dem Selbstbedienungsterminal verbunden ist;
an einem mobilen Benutzer-Endgerät, das baulich getrennt von dem Selbstbedienungsterminal ist, das über gesicherte Kanäle einer mobilen Kommunikationsverbindung mit einer zweiten rechnergestützten Einheit verbunden ist,und das einem Benutzer des Selbstbedienungsterminals zugeordnet ist, werden die zweiten Elemente und nicht die ersten Elemente angezeigt;
an dem mobilen Benutzer-Endgerät werden durch den Benutzer die Eingabedaten eingeben; und
die Eingabedaten werden an die mit dem Selbstbedienungsterminal verbundenen rechnergestützten Einheiten übertragen, die die eineindeutige Zuordnung der zweiten Elemente zu den ersten Elementen verwalten und die Authentifizierung der Transaktion durchführen.

Das vorgeschlagene System ist zur Authentifizierung und Durchführung einer solchen Transaktion beschaffen und umfasst dazu mehrere mit dem Selbstbedienungsterminal über gesicherte Netzwerk-Kanäle verbundene rechnergestützte Einheiten und Anwendungs-Programme, darunter folgende Systemkomponenten:
eine erste rechnergestützte Einheit, insbesondere einen Server, die zu einer ersten Datenmenge mit ersten Elementen, aus denen die Identifizierungsdaten gebildet werden, eine zweite Datenmenge mit zweiten Elementen bildet, welche jeweils einem der ersten Elemente eineindeutig zugeordnet sind, wodurch aus den zweiten Elementen Eingabedaten erzeugbar sind, die einer bijektiven Abbildung der Identifizierungsdaten entsprechen, wobei die zweiten Elemente verschieden von den ersten Elementen sind und wobei die Zuordnung der zweiten Datenmenge zu der ersten Datenmenge mittels einer Pseudo-Zufalls-Zuordnung der zweiten Elemente zu den ersten Elementen vor jeder Durchführung einer neuen Transaktion erneut gebildet wird;
einen Bildschirm, der baulich mit dem Selbstbedienungsterminal verbunden ist und die eineindeutige Zuordnung der zweiten Elemente zu den ersten Elementen anzeigt;
ein mobiles Benutzer-Endgerät, das baulich getrennt von dem Selbstbedienungsterminal ist, das über gesicherte Kanäle einer mobilen Kommunikationsverbindung mit einer zweiten rechnergestützten Einheit verbunden ist, und das einem Benutzer des Selbstbedienungsterminals zugeordnet ist und die zweiten Elemente und nicht die ersten Elemente anzeigt, um dem Benutzer zu ermöglichen, die Eingabedaten an dem Benutzer-Endgerät einzugeben;
wobei ein auf dem mobilen Benutzer-Endgerät implementiertes Anwendungs-Programm die Eingabedaten an eine zweite rechnergestützte Einheiten überträgt, die die Authentifizierung der Transaktion durchführt, und wobei die erste rechnergestützte Einheit die eineindeutige Zuordnung der zweiten Elemente zu den ersten Elementen verwaltet.

Die Zuordnung der zweiten Datenmenge, die zu der ersten Datenmenge mittels einer Pseudo-Zufalls-Zuordnung der zweiten Elemente zu den ersten Elementen vor jeder Durchführung einer neuen Transaktion erneut gebildet wird, wird häufiger geändert und möglichst ohne feste Regel, wobei die Zuordnung ggf. nur für eine Transaktion Gültigkeit hat.

Demnach erfolgt auf der Benutzerseite, d.h. an dem Benutzer-Endgerät, z.B. Smartphone, und/oder an dem SB-Terminal keine Eingabe der sensitiven der Identifizierungsdaten, z.B. der PIN, sondern lediglich die Eingabe von Eingabedaten, die einer bijektiven Abbildung der Identifizierungsdaten (PIN) entsprechen, wobei die Abbildung bzw. eineindeutige Zuordnung nur netzwerkseitig in der rechnergestützten Einheit gesichert hinterlegt ist. Denn für den Benutzer wird zu einer ersten Datenmenge mit ersten Elementen, wie z.B. den Ziffern von "0" bis "9", aus denen die Identifizierungsdaten (PIN) gebildet werden, eine zweite Datenmenge mit zweiten Elementen, z.B. den ersten zehn Buchstaben des Alphabets "A, B, C, ... bis J" gebildet, wobei eine eineindeutige Zugeordnung besteht. Beispielsweise ist die Ziffer "0" dem Buchstaben "I" zugeordnet und ist die Ziffer "1" dem Buchstaben "B" zugeordnet. Diese eineindeutige Zuordnung wird auf einem Bildschirm des SB-Terminals angezeigt. Auf dem Display oder Touchpad des Benutzer-Endgerätes (Smartphone) wird die Zuordnung jedoch nicht angezeigt, auch werden nicht die ersten Elemente (Ziffen "0" bis "9") angezeigt. Es werden nur die zweiten Elemente, wie z.B. die Buchstaben "A, B, C, ... J" auf dem Smartphone angezeigt, wobei die Anordnung und Reihenfolge beliebig verändert sein kann. Soll der Benutzer für die Transaktion die Identifizierungsdaten bzw. seine PIN eingeben, so gibt er nur die zugeordneten zweiten Elemente, wie z.B. Buchstaben ein, also quasi eine Pseudo-PIN (#PIN), mit der ein Ausspäher nichts anfangen kann. Da die Zuordnung nur netzwerkseitig in der rechnergestützten Einheit, einem gesicherten Server hinterlegt sind, ist ein Rückschluss auf die Identifizierungsdaten, hier z.B. der echten PIN, praktisch unmöglich. Die Erfindung kann ohne zusätzlichen Hardware-Einsatz auskommen, da übliche Systemkomponenten, wie Server, SB-Terminal genutzt werden, wobei auf dem Benutzer-Endgerät lediglich eine kleine Software-Applikation (sog. App) laufen muss, die in Kommunikation mit dem Server steht.

Vorteilhafte Ausgestaltungen der Erfindung ergeben sich aus den Unteransprüchen:
Demnach ist es vorteilhaft, wenn die ersten Elemente die Tastenwerte einer numerischen Tastatur umfassen und wenn die zweiten Elemente Komponenten eines vorgebbaren Schemas umfassen, insbesondere Symbole und/oder Buchstaben eines Alphabets, Graustufen einer Graustufenskala, Farben einer Farbskala und/oder Positionen eines Positionsschemas umfassen. Damit enthält die Pseudo-PIN (#PIN) keinerlei Ziffern bzw. numerischen Elemente. Dies hat den besonderen Vorteil, dass einem Ausspäher die Wahrnehmung einer Dateneingabe noch weiter erschwert werden, weil dieser ja die Eingabe von Ziffern erwartet und somit ggf. gar nicht wahrnimmt, dass der Benutzer momentan eine Eingabe macht, die die PIN betreffen könnte. Außerdem ist es für einen Ausspäher eher schwierig, sich Symbole oder gar Grauwerte zu merken. Die Zuordnung kennt er ohnehin nicht, so dass selbst ein erfolgreiches Ausspähen der Pseudo-PIN nicht zum Erfolg führen kann.

Vorzugsweise ist das mobile Benutzer-Endgerät ein Smartphone, welches einen Berührungsbildschirm bzw. Touchscreen oder Touchpad aufweist, wobei die zweiten Elemente, insbesondere als Symbole des vorgebbaren Schemas, an dem Berührungsbildschirm angezeigt werden, und wobei die Eingabedaten an dem Berührungsbildschirm von dem Benutzer eingeben werden. Der Benutzer kann also direkt auf dem Touchpad seines Smartphones innerhalb des angezeigten Schemas die Eingabe der Pseudo-PIN machen.

Von Vorteil ist es auch, wenn das Benutzer-Endgerät eine Kamera aufweist und wenn zur Überprüfung, ob sich das Benutzer-Endgerät in der Nähe des SB-Terminals befindet, auf dem Bildschirm ein grafischer Code, insbesondere ein Barcode, angezeigt wird, wobei der grafische Code von der Kamera des Benutzer-Endgerätes erfasst, insbesondere abgetastet, wird; und wobei von dem Benutzer-Endgerät Kenndaten des erfassten grafischen Codes an die eine oder mehreren rechnergestützten Einheiten übertragen werden, die die Kenndaten des grafischen Codes verwalten und die Authentifizierung der Transaktion durchführen. Hierdurch kann sicher geprüft werden, dass der Benutzer sich an dem SB-Terminal befindet, an dem die Transaktion (z.B. Auszahlung von Bargeld) erfolgen soll.

Vorzugsweise ist das Selbstbedienungsterminal bzw. SB-Terminal ein Geldautomat, insbesondere ein Geldautomat, der keine Tastatur zur Eingabe der Identifizierungsdaten aufweist.

Die Erfindung und die sich daraus ergebenden Vorteile werden nun nachfolgend im Detail und anhand der beiliegenden Zeichnungen beschrieben, welche folgendes wiedergeben:
- Fig. 1: zeigt in Form eines Blockdiagramms den prinzipiellen Aufbau eines erfindungsgemäßen Systems;
- Fig. 2: zeigt in Form eines Ablaufdiagramms die Schritte eines erfindungsgemäßen Verfahrens;
- Fig. 3: zeigt die Anzeige einer Zuordnung auf dem Bildschirm eines SB-Terminals, das eine Systemkomponente des Systems nach Fig. 1 darstellt; und
- Fig. 4a-c: zeigen in drei Varianten die Anzeige eines Eingabeschemas auf dem Touchpad eines mobilen Benutzer-Endgerätes, das eine Systemkomponente des Systems nach Fig. 1 darstellt;

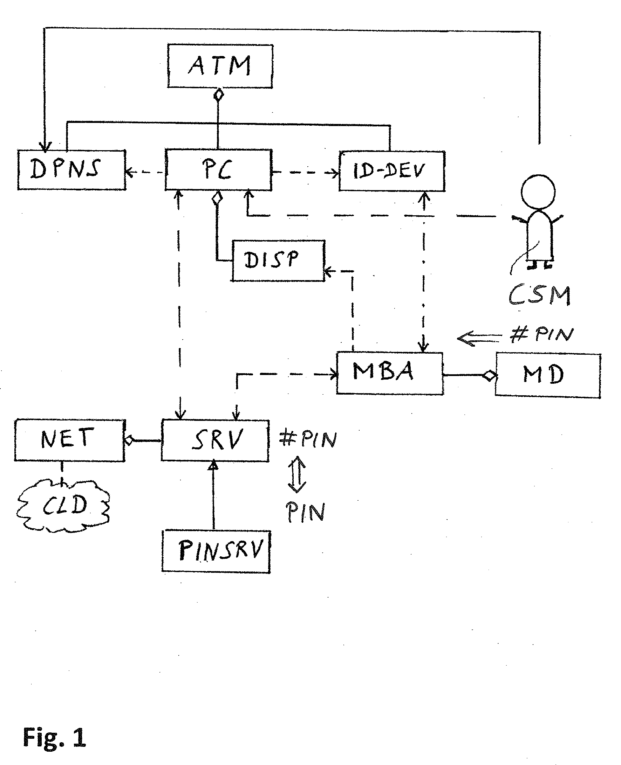

Die Fig. 1 zeigt den prinzipiellen Aufbau eines erfindungsgemäßen Systems zur Authentifizierung und Durchführung einer Transaktion an einem Selbstbedienungsterminal, auch kurz SB-Terminal genannt, des Systems. Als SB-Terminal ist beispielhaft ein Geldautomat ATM gezeigt, der Transaktionen zur Auszahlung von Bargeld durchführen kann. Außerdem sind folgende Komponenten des Geldautomaten dargestellt: ein Geldausgabeschacht DPNS, ein Identifikations-Vorrichtung ID-DEV, hier in Gestalt eines Kartenlesers für Chip-Karten, und ein Bildschirm DISP sowie ein Rechner bzw. Computer PC, der die Abläufe in dem Geldautomaten steuert und in Verbindung mit netzwerkseitigen Einheiten steht. Der Rechner PC und der Bildschirm DISP bilden die Zentraleinheit des Geldautomaten ATM. Die Identifikations-Vorrichtung ID-DEV dient hier zum Lesen von Kundenkarten und ist somit Teil eines zusätzlichen Sicherheitskanals (Security Channel), der neben der PIN-Eingabe vorgesehen ist.

Zu den netzwerkseitigen Einheiten des Systems zählen: ein zentraler Server SRV, der für eine größere Anzahl von Geldautomaten zuständig ist, ein PIN-Server PINSRV, der die Eingabe von Identifizierungsdaten prüft. Der Server SRV ist mit einem Server-Netzwerk NET verbunden, welches für weitere Geldautomaten zuständig ist und eine sog. Cloud bilden kann.

Der Benutzer CSM des Geldautomaten ATM hat ein mobiles Benutzer-Endgerät MD, z.B. ein Smartphone, auf dem eine Applikation MBA installiert ist, um die Transaktion, wie nachfolgend beschrieben, von seinem Smartphone aus durchführen zu können. Diese Applikation wird nachfolgend auch Mobile Banking Application MBA genannt und läuft auf dem Smartphone des Kunden, um das Benutzer-Interface (User Interface) für die Transaktion wiederzugeben. Der Geldautomat ATM kann sehr weit entfernt vom Server SRV sein. Insgesamt sind die Server und Geldautomaten sowie die mobilen Benutzer-Endgeräte über sichere (Netzwerk-) Kanäle verbunden, die wie z.B. über 3G, 4G, WIFI und WAN-Verbindungen, die jeweils z.B. mit SSL oder TLS abgesichert sind. Es besteht aber keine direkte Netzwerkverbindung zwischen Geldautomat ATM und mobilen Endgerät MD.

Das erfindungsgemäße Verfahren 100 wird anhand der Fig. 2 beschrieben, wobei auch auf die Fig. 1 Bezug genommen wird. Die Schritte des Verfahrens sind spaltenweise angeordnet und den jeweiligen Systemkomponenten MBA, ATM und SRV / NET bzw. dem beteiligten Benutzer CSM zugewiesen.

In einem ersten Schritt 101 veranlasst der Benutzer CSM den Beginn einer neuen Transaktion, hier einer Bargeldauszahlung. Dazu startet der Kunde die App MBA auf seinem Smartphone und loggt sich dort ein, z.B. über sein MBA-Passwort, wodurch die Verbindung zum Server hergestellt wird.

Der Geldautomaten ATM fragt im Schritt 102 nach Identifizierungsdaten, die auch die sog. PAN (primary account number) der Kundenbankkarte enthalten können. Der Benutzer führt seine Bankkarte in den Kartenleser ID-DEV ein. Alternativ dazu hält er seine NFC-Karte an den Kartenleser. Dieser Schritt der ID-Prüfung über einen zweiten Sicherheits-Kanal ist optional und dient der zusätzlichen Sicherheit.

Der ATM prüft nun im Schritt 104, ob der Benutzer sich tatsächlich vor dem Geldautomaten befindet. Dazu wird vom Server ein zufälligen mehrstelliger Zahlencode erzeugt und an den Geldautomaten ATM. übertragen, welcher einen passenden grafisch darstellbarer Code (Barcode, QR-Code) erzeugt und auf dem Bildschirm DISP angezeigt. Der Kunde hält sein Smartphone MD bzw. dessen Kamera so an den Bildschirm, dass die App MBA mittels der Kamera Barcode lesen bzw. einscannen und in den passenden Zahlencode umwandeln. Die auf dem Smartphone des Benutzers installierte App. MBA scannt im Schritt 105 mit Hilfe der Smartphone-Kamera den Code vom Bildschirm ab und sendet das Ergebnis über eine Mobilkommunikationsverbindung an den Server bzw. das Netzwerk SRV / NET, wo geprüft wird, ob die Ergebnisdaten zu dem angezeigten Code passen. Wenn dies der Fall ist, dann wird festgestellt, dass der Benutzer sich tatsächlich am Geldautomaten befindet. Die Transaktion wird dann weitergeführt. Auch dieser Schritt ist optional und richtet sich je nach den Sicherheitsvorschriften der Bank oder internationaler bzw. landestypischer Institutionen. Möglicherweise genügt auch ein in dem Smartphone ggf. vorhandener Chip für NFC (Nahfeldkommunikation). Außerdem ist das Erzeugen und Scannen eines Barcodes nur eine von vielen Möglichkeiten. Es könnte auch eine zufällig generierte Grafik genutzt werden. Oder es könnte auf das Anzeigen und Abtasten grafischer Kennungen verzichtet werden. Stattdessen könnten die Daten des Kunden auch über das Smartphone zusammen mit einer Ortsangabe (z.B. GPS/GSMIWIFI) an den Server gesendet werden, um zu prüfen, ob der Kunde sich am Ort des betreffenden Geldautomaten ATM befindet.

Was die Identität des Servers angeht, so wird diese von der App MBA z.B. mittels SSL-Zertifikat festgestellt. Alternativ könnte ein optisches Barcode-Verfahren, wie zuvor beschrieben, verwendet werden. Dann würde die App zwei Barcodes scannen müssen. In diesem Fall sollten beide Scanvorgänge unmittelbar nacheinander durchgeführt werden. Dann dürften sie vom Kunden kaum wahrgenommen, geschweige denn als störend empfunden werden. Ein Zertifikat hat jedoch den Vorteil, dass es sicher ist gegenüber einem Angriff per Fake-ATM nebst Fake-Server.

In den nächsten Schritten 107 - 111 wird die Anfrage und sichere Eingabe von Identifizierungsdaten bezüglich der PIN durchgeführt. Hierzu wird auch auf die Fig. 3 und Fig. 4a-c Bezug genommen:

Im Schritt 107 wird auf dem Bildschirm des Geldautomaten ATM eine Zuordnung von ersten Elementen, nämlich Ziffern 0, 1, 2, ...9, zu zweiten Elementen, nämlich Buchstaben A, B, C, D .... J, angezeigt und zwar in einer vorzugsweise pseudo-zufälligen Reihenfolge. Dazu generiert der Server eine Permutation der Ziffern von 0 bis 9 und sendet diese an den Geldautomaten ATM, der dann Buchstaben und Zahlen wie in Fig. 3 gezeigt, anzeigt. Die Zuordnung ist nur dem PIN-Server PINSRV bekannt und wird nicht über das Mobilkommunikationsnetz oder andere unsichere Netzwerk übertragen. Innerhalb der Zuordnung repräsentiert jeder Buchstabe dabei eine Positionsangabe (s. Fig. 3). Bezogen auf die Ziffern-Anordnung auf einem EPP bedeutet dies, dass jede Ziffer einer Position bzw. einem Buchstaben eineindeutig zugeordnet ist, z.B. ist 5 auf Position D und 4 auf Position H. Die Zuordnung wird lediglich auf dem Bildschirm des Geldautomaten ATM für eine vorgebbare Zeitdauer angezeigt, so dass der Benutzer sich die Zuordnung einprägen kann bzw. anhand der Zuordnung seine PIN in Buchstaben chiffrieren kann. Beispielsweise lautet die vierstellige PIN wie folgt "3456". Der Benutzer erkennt anhand der in Fig. 3 dargestellten Zuordnung, dass die Buchstabenfolge wie folgt sein muss: A-H-D-J.

Nun wird im Schritt 108 durch die App MBA ein Eingabeschema auf dem Touchpad des Smartphones angezeigt, so wie dies in den Fig. 4a-c an drei Beispielen dargestellt ist. Demnach wird nicht die Zuordnung und auch nicht die PIN-Tastatur angezeigt, sondern eine Anordnung der zweiten Elemente (hier der Buchstaben), wobei die Anordnung auch pseudo-zufällig erzeugt werden kann. Die Fig. 4a zeigt zum besseren Verständnis der Erfindung nur keine pseudo-zufällige Anordnung, sondern die Anordnung der Buchstaben entsprechend ihrer alphabetischen Rangfolge, also: A-B-C-D-....-J.

Zur Abfrage der PIN wird der Benutzer im Schritt 109 aufgefordert die entsprechenden Buchstaben am Touchpad seinen Smartphones einzugeben. Im Beispiel hier würde er die Buchstabenfolge: A-H-D-J eingeben. Die App. MBA sendet dann im Schritt 110 jeden Buchstaben einzeln oder die gesamte Folge (alle vier chiffrierten Daten) an den Server SRV bzw. PIN-Server. Dieser kann dann die chiffrierten Daten entschlüsseln und feststellen, wie die echte PIN lautet (Schritt 111).

Im Schritt 112, d.h. in der eigentlichen Authentifizierung, kann dann die Transaktion freigegeben werden. Der Geldautomat zahlt im Schritt 113 das gewünschte Bargeld aus, und der Benutzer entnimmt es im Schritt 114 aus dem Geldausgabefach.

Anstelle eines streng geordneten Eingabeschemas, wie es in Fig. 4a dargestellt ist, können auch ungeordnete Eingabeschemen bzw. Anordnungen der Buchstaben angezeigt werden, so wie es die Fig. 4b und 4c beispielhaft zeigen. Die Anordnung wird vorzugsweise über einen Pseudo-Zufallsprozess erzeugt und als Bildschirmtastatur auf dem Touchpad des Smartphones angezeigt Die Erzeugung der Bildschirmtastatur kann für jede neue Transaktion durchgeführt werden, wobei die große Kombinationsmöglichkeit der angeordneten Tasten ganz ausgeschöpft werden kann.

Die Erfindung kann insbesondere bei SB-Terminals realisiert werden, bei denen auf eine eigene PIN-Eingabetastatur und die dafür erforderliche EPP-Sonderelektronik verzichtet wurde. Die Erfindung ermöglicht es, dass mithilfe des Smartphones des Kunden eine sichere PINEingabe durchgeführt werden kann. Dabei kann auch sicher festgestellt werden, dass sich das Smartphone des Kunden tatsächlich in unmittelbarer Nähe des Geldautomaten ATMs befindet. Das beschriebene Verfahren ist weitaus weniger anfällig für Manipulationen und Skimming, als bei der klassischen Eingabe einer PIN über ein EPP der Fall ist.

Die obige Beschreibung zusammenfassend wird zur sicheren Eingabe einer PIN oder anderen Identifizierungsdaten eine dynamisch vorgebbare Zuordnung von Tastenposition und Tastenwert in Form eines flexiblen Eingabeschemas vorgeschlagen. Dazu wird auf dem Geldautomaten-Bildschirm eine vorgegebene, vorzugsweise pseudo-zufällig erzeugte, Zuordnung von Tastenwerten bzw. Ziffern aus dem Zahlenraum 0-9 zu Tastenposition in Form von Symbolen, Buchstaben A, B, C... oder dergleichen angezeigt. Allerdings werden auf dem Benutzer-Smartphone nur die Tastenpositionen, d.h. die Symbole, Buchstaben oder dergleichen in Form eines Eingabeschemas angezeigt. Der Benutzer gibt nicht seine PIN (z.B. "3456") ein, sondern gibt nur die entsprechend dem Eingabeschema zugeordneten Tastenpositionen ("AHDJ") ein. Dies hat den Vorteil, dass durch den Benutzer keine PIN-Eingabe mehr erfolgt, die ausgespäht werden könnte. Es werden nur die Daten (Buchstaben) der zugehörigen Tastenpositionen ("AHDJ") eingeben. Das Smartphone kennt die PIN nicht, auch der Geldautomat ATM kennt die PIN nicht, sondern lediglich das Schema. Allein der Server kennt Schema und PIN und kann die Transaktion freigeben. Dieses Verfahren ist deshalb sehr sicher.

Mit anderen Worten: Jeder Buchstabe repräsentiert eineindeutig eine Positionsangabe. Auf dem Smartphone werden nur Positionsangaben (Buchstaben A-J) gezeigt, nicht aber die zugeordneten Ziffern. Jede vom Benutzer eingetippte Positionsangabe wird von der App MBA an den Server übermittelt. Da der Server sowohl die PIN kennt, als auch die an den Geldautomaten ATM übermittelte Permutation der Ziffern 0-9, kann er nun vergleichen, ob der Kunde die korrekte PIN eingegeben hat. Der Geldautomat ATM hat keinerlei Informationen über die PIN des Kunden, ihm wurde lediglich eine zufällige Permutation gesendet. Die App MBA hat lediglich Positionsangaben vom Kunden erhalten, hat aber mangels Kenntnis der Permutation keinerlei Möglichkeiten auf die Zugehörige PIN zu schließen. Die PIN ist ausschließlich dem Kunden und dem Server bekannt! Das Anzeigen der Positionen mittels Buchstaben ist nur ein möglicher Weg. Genauso könnten z.B. die Positionen mit verschiedenen Grafiken, geometrischen Figuren oder Grauwerten dargestellt werden.

Da die Erfindung für eine Transaktion das Smartphone des jeweiligen Benutzers einsetzt, können am Geldautomaten ATM insbesondere das PIN-Pad / EPP eingespart werden.

Die Sicherheit des Verfahrens lässt sich bei Bedarf weiter erhöhen, indem für jede Ziffer neue Permutationen generiert und angezeigt werden. Auch hier werden die Permutationen wieder im Server gespeichert, um dann später den Vergleich der vom Kunden eingegebenen PIN mit der im Server gespeicherten PIN durchführen zu können. Da diese Informationen über das Smartphone des Kunden eingegeben werden, ist Skimming wesentlich schwieriger zu realisieren, da es mangels EPP keine fest installierte Tastatur am Geldautomaten ATM gibt. Auch müssten sowohl das Display des ATMs als auch das Smartphone samt Finger des Kunden "überwacht" werden.

Optional kann zur Überprüfung, ob das Smartphone sich im unmittelbaren Bedienbereich des Geldautomaten ATM befindet, ein optisch scannbarer Code (Barcode / QR-Code oder allg. auch eine Grafik) erzeugt und auf dem Bildschirm des Geldautomaten angezeigt werden. Dann erfolgt das Scannen des Codes mit dem Smartphone und Senden der Daten an einen Server, der schließlich die Daten mit dem im Server hinterlegten Code vergleicht. Somit kann einfach festgestellt, dass das Smartphone sich im unmittelbaren Bedienbereich des Geldautomaten befindet und somit wohl zu dem Benutzer gehört.

## Patentansprüche

1. Verfahren (100) zur gesicherten Eingabe von Identifizierungsdaten (PIN) eines Benutzers (CSM) eines Selbstbedienungsterminals (ATM) für die Authentifizierung einer Transaktion, die mittels des Selbstbedienungsterminals (ATM) durchgeführt wird, das über gesicherte Kanäle mit mehreren rechnergestützten Einheiten (PINSRV,SRV) verbunden ist, wobei die mehreren rechnergestützten Einheiten (PINSRV,SRV) mindestens eine erste rechnergestützte Einheit (PINSRV) und eine zweite rechnergestützte Einheit (SRV) umfassen, **gekennzeichnet durch** folgende Schritte:
zu einer ersten Datenmenge mit ersten Elementen, die Tastenwerte (0, 1, 2, 3, ... 9) einer numerischen Tastatur umfassen, aus denen die Identifizierungsdaten (PIN) gebildet werden, wird in der ersten rechnergestützten Einheit (PINSRV) eine zweite Datenmenge mit zweiten Elementen, die Komponenten (A, B, C, ... J) eines vorgebbaren Schemas umfassen, gebildet, welche jeweils einem der ersten Elemente (0, 1, 2, 3, ... 9) eineindeutig zugeordnet sind, wodurch aus den zweiten Elementen Eingabedaten (#PIN) erzeugbar sind, die einer bijektiven Abbildung der Identifizierungsdaten (PIN) entsprechen, wobei die zweiten Elemente verschieden von den ersten Elementen sind und wobei die Zuordnung der zweiten Datenmenge zu der ersten Datenmenge mittels einer Pseudo-Zufalls-Zuordnung der zweiten Elemente (A, B, C, ... J) zu den ersten Elementen (0, 1, 2, 3, ... 9) vor jeder Durchführung einer neuen Transaktion erneut gebildet wird, wobei von der ersten rechnergestützten Einheit (PINSRV) eine Permutation der ersten Elemente (0, 1, 2, 3, ... 9) generiert und an das Selbstbedienungsterminal (ATM) gesendet wird; die eineindeutige Zuordnung der zweiten Elemente (A, B, C, ... J) zu den ersten Elementen (0, 1, 2, 3, ... 9) wird auf einem Bildschirm (DISP) angezeigt, der baulich mit dem Selbstbedienungsterminal (ATM) verbunden ist (Schritt 107);
an einem mobilen Benutzer-Endgerät (MD), das baulich getrennt von dem Selbstbedienungsterminal (ATM) ist, das über gesicherte Kanäle einer mobilen Kommunikationsverbindung mit der zweiten rechnergestützten Einheit (SRV) verbunden ist, und das dem Benutzer (CSM) des Selbstbedienungsterminals (ATM) zugeordnet ist, werden die zweiten Elemente (A, B, C, ... J) und nicht die ersten Elemente (0, 1, 2, 3, ... 9) **durch** ein auf dem mobilen Benutzer-Endgerät implementiertes Anwendungs-Programm angezeigt (Schritt 108); an dem mobilen Benutzer-Endgerät (MD) werden **durch** den Benutzer (CSM) die Eingabedaten (#PIN) eingeben (Schritt 109); und
die Eingabedaten (#PIN), die aus den zweiten Elementen erzeugt sind, werden mittels des Anwendungs-Programms (MBA) an die mit dem Selbstbedienungsterminal (ATM) über die gesicherten Netzwerk-Kanäle verbundenen rechnergestützten Einheiten (PINSRV; SRV) übertragen (Schritt 110), wobei die zweite rechnergestützte Einheit (SRV) die Authentifizierung der Transaktion durchführt und wobei die erste rechnergestützte Einheit (PINSRV), die die eineindeutige Zuordnung der zweiten Elemente (A, B, C, ... J) zu den ersten Elementen (0, 1, 2, 3, ... 9) verwaltet, die Eingabedaten (#PIN) prüft (Schritt 111).

2. Verfahren (100) nach Anspruch 1, **dadurch gekennzeichnet, dass** die zweiten Elemente Komponenten eines vorgebbaren Schemas umfassen, die Symbole, insbesondere Buchstaben (A, B, C...J) eines Alphabets, Graustufen einer Graustufenskala, Farben einer Farbskala und/oder Positionen eines Positionsschemas sind.

3. Verfahren (100) nach einem vorhergehenden Anspruch, **dadurch gekennzeichnet, dass** das mobile Benutzer-Endgerät ein Smartphone (MD) mit einem Berührungsbildschirm bzw. Touchscreen ist, dass die zweiten Elemente, insbesondere als Symbole (A, B, C, ... J) des vorgebbaren Schemas, an dem Berührungsbildschirm angezeigt werden (Schritt 107), und dass die Eingabedaten (#PIN) an dem Berührungsbildschirm von dem Benutzer (CSM) eingeben werden (Schritt 108).

4. Verfahren (100) nach einem vorhergehenden Ansprüche, **dadurch gekennzeichnet, dass** das mobile Benutzer-Endgerät (MD) eine Kamera aufweist und dass vor der Durchführung der Transaktion eine Überprüfung, ob sich das mobile Benutzer-Endgerät (MD) in der Nähe des Selbstbedienungsterminals (ATM) befindet, durchgeführt wird, wobei auf dem Bildschirm (DISP) ein grafischer Code, insbesondere ein Barcode, angezeigt wird (Schritt 104); wobei der grafische Code von der Kamera des Benutzer-Endgerätes (MD) erfasst, insbesondere abgetastet, wird (Schritt 105); und wobei von dem Benutzer-Endgerät (MD) Kenndaten des erfassten grafischen Codes an die mehreren mit dem Selbstbedienungsterminal (ATM) verbundenen rechnergestützten Einheiten (PINSRV; SRV) übertragen werden, die die Kenndaten des grafischen Codes verwalten und die Überprüfung durchführen.

5. System zur Authentifizierung und Durchführung einer Transaktion an einem Selbstbedienungsterminal (ATM) des Systems, wobei das System zur Authentifizierung der Transaktion mittels einer gesicherten Eingabe von Identifizierungsdaten (PIN) eines Benutzers (CSM) des Selbstbedienungsterminals (ATM) mehrere mit dem Selbstbedienungsterminal (ATM) über gesicherte Netzwerk-Kanäle verbundene rechnergestützte Einheiten (PINSRV; SRV) umfasst, wobei die mehreren rechnergestützten Einheiten (PINSRV,SRV) mindestens eine erste rechnergestützte Einheit (PINSRV) und eine zweite rechnergestützte Einheit (SRV) umfassen, 10 **gekennzeichnet durch** folgende Systemkomponenten:
die erste rechnergestützte Einheit (PINSRV), die zu einer ersten Datenmenge mit ersten Elementen, die Tastenwerte (0, 1, 2, 3, ... 9) einer numerischen Tastatur umfassen, aus denen die Identifizierungsdaten (PIN) gebildet werden, eine zweite Datenmenge mit zweiten Elementen, die Komponenten (A, B, C, ... J) eines vorgebbaren Schemas umfassen, bildet, welche jeweils einem der ersten Elemente (0, 1, 2, 3, ... 9) eineindeutig zugeordnet sind, wodurch aus den zweiten Elementen Eingabedaten (#PIN) erzeugbar sind, die einer bijektiven Abbildung der Identifizierungsdaten (PIN) entsprechen, wobei die zweiten Elemente verschieden von den ersten Elementen sind und wobei die Zuordnung der zweiten Datenmenge zu der ersten Datenmenge mittels einer Pseudo-Zufalls-Zuordnung der zweiten Elemente (A, B, C, ... J) zu den ersten Elementen (0, 1, 2, 3, ... 9) vor jeder Durchführung einer neuen Transaktion erneut gebildet wird, wobei die erste rechnergestützte Einheit (PINSRV) eine Permutation der ersten Elemente (0, 1, 2, 3, ... 9) generiert und an das Selbstbedienungsterminal (ATM) sendet; einen Bildschirm (DISP), der baulich mit dem Selbstbedienungsterminal (ATM) verbunden ist und die eineindeutige Zuordnung der zweiten Elemente (A, B, C, ... J) zu den ersten Elementen (0, 1, 2, 3, ... 9) anzeigt;
ein mobiles Benutzer-Endgerät (MD), das baulich getrennt von dem Selbstbedienungsterminal (ATM) ist, das über gesicherte Kanäle einer mobilen Kommunikationsverbindung mit der zweiten rechnergestützten Einheit (SRV) verbunden ist, und das dem Benutzer (CSM) des Selbstbedienungsterminals (ATM) zugeordnet ist und die zweiten Elemente (A, B, C, ... J) und nicht die ersten Elemente (0, 1, 2, 3, ... 9) **durch** ein Anwendungs-Programm (MBA) anzeigt, um dem Benutzer (CSM) zu ermöglichen, die Eingabedaten (#PIN) an dem Benutzer-Endgerät (MD) einzugeben; wobei das Anwendungs-Programm (MBA) auf dem mobilen Benutzer-Endgerät (MD) implementiert ist und wobei das Anwendungs-Programm (MBA) die Eingabedaten (#PIN), die aus den zweiten Elementen erzeugt sind, an die rechnergestützten Einheiten (PINSRV; SRV) überträgt, wobei die zweite rechnergestützten Einheiten (SRV) die Authentifizierung der Transaktion durchführt, und wobei die erste rechnergestützte Einheit (PINSRV), die eineindeutige Zuordnung der zweiten Elemente (A, B, C, ... J) zu den ersten Elementen (0, 1, 2, 3, ... 9) verwaltet, die Eingabedaten (#PIN) prüft.

6. System nach Anspruch 5, **dadurch gekennzeichnet, dass** das Selbstbedienungsterminal ein Geldautomat (ATM) ist, insbesondere ein Geldautomat (ATM) ist, der keine Tastatur zur Eingabe der Identifizierungsdaten (PIN) aufweist.

7. System nach Anspruch 5 oder 6, **dadurch gekennzeichnet, dass** das mobile Benutzer-Endgerät ein Smartphone (MD) mit einem Berührungsbildschirm bzw. Touchscreen ist, das die zweiten Elemente (A, B, C, ... J) entsprechend dem vorgebbaren Schema an dem Berührungsbildschirm anzeigt, um dem Benutzer (CSM) zu ermöglichen, die Eingabedaten (#PIN) an dem Berührungsbildschirm anstelle der Identifizierungsdaten (PIN) einzugeben.

8. System nach einem der Ansprüche 5 bis 7, **dadurch gekennzeichnet, dass** das Benutzer-Endgerät (MD) eine Kamera aufweist und dass zur Überprüfung, ob sich das Benutzer-Endgerät (MD) in der Nähe des Selbstbedienungsterminals (ATM) befindet, der Bildschirm (DISP) des Selbstbedienungsterminals (ATM) einen grafischen Code, insbesondere einen Barcode, anzeigt; dass die Kamera des Benutzer-Endgerätes (MD) den grafische Code erfasst, insbesondere abgetastet; und dass das Benutzer-Endgerät (MD) Kenndaten des erfassten grafischen Codes an die mehreren mit dem Selbstbedienungsterminal (ATM) verbundenen rechnergestützten Einheiten (PINSRV; SRV) überträgt, die die Überprüfung durchführen und die Kenndaten des grafischen Codes verwalten.

## Claims

1. Method (100) for the secure input of identification data (PIN) of a user (CSM) of a self-service terminal (ATM) for the authentication of a transaction that is performed by means of the self-service terminal (ATM), which terminal is connected to multiple computer-aided units (PINSRV, SRV) via secure channels, wherein the multiple computer-aided units (PINSRV, SRV) comprise at least a first computer-aided unit (PINSRV) and a second computer-aided unit (SRV), **characterized by** the following steps:
for a first volume of data having first elements, which comprise key values (0, 1, 2, 3, ... 9) of a numerical keypad, from which key values the identification data (PIN) are formed, the first computer-aided unit (PINSRV) is used to form a second volume of data having second elements, which comprise components (A, B, C, .... J) of a prescribable scheme, which are each uniquely associated with one of the first elements (0, 1, 2, 3, ... 9), as a result of which input data (#PIN) can be generated from the second elements, which input data correspond to a bijective mapping of the identification data (PIN), wherein the second elements are different from the first elements and wherein the association between the second volume of data and the first volume of data is formed afresh, by means of a pseudorandom association between the second elements (A, B, C, ... J) and the first elements (0, 1, 2, 3, .....9), prior to each performance of a new transaction, wherein the first computer-aided unit (PINSRV) generates a permutation of the first elements (0, 1, 2, 3, ...9) and sends it to the self-service terminal (ATM); the unique association between the second elements (A, B, C, ....J) and the first elements (0, 1, 2, 3, ....9) is displayed on a screen (DISP) that is physically connected to the self-service terminal (ATM) (step 107); a mobile user terminal (MD), which is physically separate from the self-service terminal (ATM), which is connected to the second computer-aided unit (SRV) via secure channels of a mobile communication link, and which is associated with the user (CSM) of the self-service terminal (ATM), is used to display the second elements (A, B, C, ...J) rather than the first elements (0, 1, 2, 3, ....9) by virtue of an application program implemented on the mobile user terminal (step 108);
the mobile user terminal (MD) is used by the user (CSM) to input the input data (#PIN) (step 109); and
the input data (#PIN) that are generated from the second elements are transmitted by means of the application program (MBA) to the computer-aided units (PINSRV; SRV) connected to the self-service terminal (ATM) via the secure network channels (step 110), wherein the second computer-aided unit (SRV) performs the authentication of the transaction and wherein the first computer-aided unit (PINSRV), which manages the unique association between the second elements (A, B, C, ....J) and the first elements (0, 1, 2, 3, ...9), checks the input data (#PIN) (step 111).

2. Method (100) according to Claim 1, **characterized in that** the second elements comprise components of a prescribable scheme that are symbols, particularly letters (A, B, C ....J) of an alphabet, greyscale values of a grey scale, colours of a colour scale and/or positions of a position scheme.

3. Method (100) according to a preceding claim, **characterized in that** the mobile user terminal is a smartphone (MD) having a touch screen, **in that** the second elements, particularly as symbols (A, B, C, ...J) of the prescribable scheme, are displayed on the touch screen (step 107), and **in that** the input data (#PIN) are input on the touch screen by the user (CSM) (step 108).

4. Method (100) according to one of the preceding claims, **characterized in that** the mobile user terminal (MD) has a camera and **in that** prior to the performance of the transaction, a check to determine whether the mobile user terminal (MD) is in proximity to the self-service terminal (ATM) is performed, wherein the screen (DISP) is used to display a graphical code, particularly a bar code (step 104); wherein the graphical code is captured, particularly scanned, by the camera of the user terminal (MD) (step 105); and wherein the user terminal (MD) transmits characteristic data of the captured graphical code to the multiple computer-aided units (PINSRV; SRV) connected to the self-service terminal (ATM), which computer-aided units manage the characteristic data of the graphical code and perform the check.

5. System for authenticating and performing a transaction on a self-service terminal (ATM) of the system, wherein the system for authenticating the transaction by means of secure input of identification data (PIN) of a user (CSM) of the self-service terminal (ATM) comprises multiple computer-aided units (PINSRV; SRV) connected to the self-service terminal (ATM) via the secure network channels,
wherein the multiple computer-aided units (PINSRV, SRV) comprise at least a first computer-aided unit (PINSRV) and a second computer-aided unit (SRV),
**characterized by** the following system components:
the first computer-aided unit (PINSRV), which forms, for a first volume of data having first elements, which comprise key values (0, 1, 2, 3, ...9) of a numerical keypad, from which key values the identification data (PIN) are formed, a second volume of data having second elements, which comprise components (A, B, C, ....J) of a prescribable scheme, which are each uniquely associated with one of the first elements (0, 1, 2, 3, ...9), as a result of which input data (#PIN) can be generated from the second elements, which input data correspond to a bijective mapping of the identification data (PIN), wherein the second elements are different from the first elements and wherein the association between the second volume of data and the first volume of data is formed afresh, by means of a pseudorandom association between the second elements (A, B, C, ... J) and the first elements (0, 1, 2, 3, .....9), prior to each performance of a new transaction, wherein the first computer-aided unit (PINSRV) generates a permutation of the first elements (0, 1, 2, 3, ...9) and sends it to the self-service terminal (ATM);
a screen (DISP), which is physically connected to the self-service terminal (ATM) and displays the unique association between the second elements (A, B, C, .... J) and the first elements (0, 1, 2, 3, ...9);
a mobile user terminal (MD), which is physically separate from the self-service terminal (ATM), which is connected to the second computer-aided unit (SRV) via secure channels of a mobile communication link, and which is associated with the user (CSM) of the self-service terminal (ATM) and displays the second elements (A, B, C, ....J) rather than the first elements (0, 1, 2, 3, ...9) by virtue of an application program (MBA), in order to allow the user (CSM) to input the input data (#PIN) using the user terminal (MD) ;
wherein the application program (MBA) is implemented on the mobile user terminal (MD) and wherein the application program (MBA) transmits the input data (#PIN) that are generated from the second elements to the computer-aided units (PINSRV; SRV), wherein the second computer-aided unit (SRV) performs the authentication of the transaction, and wherein the first computer-aided unit (PINSRV), which manages the unique association between the second elements (A, B, C, ...J) and the first elements (0, 1, 2, 3, ....9), checks the input data (#PIN).

6. System according to Claim 5, **characterized in that** the self-service terminal is an automated teller machine (ATM), particularly an automated teller machine (ATM) that has no keypad for input of the identification data (PIN).

7. System according to Claim 5 or 6, **characterized in that** the mobile user terminal is a smartphone (MD) having a touch screen, which smartphone displays the second elements (A, B, C, ...J) on the touch screen in accordance with the prescribable scheme in order to allow the user (CSM) to input the input data (#PIN) on the touch screen instead of the identification data (PIN).

8. System according to one of Claims 5 to 7, **characterized in that** the user terminal (MD) has a camera and **in that** in order to check whether the user terminal (MD) is in proximity to the self-service terminal (ATM), the screen (DISP) of the self-service terminal (ATM) displays a graphical code, particularly a bar code; **in that** the camera of the user terminal (MD) captures, particularly scans, the graphical code; and **in that** the user terminal (MD) transmits characteristic data of the captured graphical code to the multiple computer-aided units (PINSRV; SRV) connected to the self-service terminal (ATM), which computer-aided units perform the check and manage the characteristic data of the graphical code.

## Revendications

1. Procédé (100) de saisie sécurisée de données d'identification (PIN) d'un utilisateur (CSM) d'un terminal en libre service (ATM) pour l'authentification d'une transaction qui est exécutée au moyen du terminal en libre service (ATM), lequel est relié à plusieurs unités assistées par ordinateur (PINSRV, SRV) par le biais de canaux sécurisés, les plusieurs unités assistées par ordinateur (PINSRV, SRV) comprenant au moins une première unité assistée par ordinateur (PINSRV) et une deuxième unité assistée par ordinateur (SRV), **caractérisé par** les étapes suivantes :
pour une première quantité de données comprenant des premiers éléments, lesquels incluent les valeurs de touche (0, 1, 2, 3, ... 9) d'un clavier numérique, à partir desquelles sont formées les données d'identification (PIN), une deuxième quantité de données comprenant des deuxièmes éléments, lesquels englobent les composants (A, B, C, ... J) d'un schéma pouvant être prédéfini, est formée dans la première unité assistée par ordinateur (PINSRV), lesquels sont respectivement associés de manière univoque à l'un des premiers éléments (0, 1, 2, 3, ... 9), des données de saisie (#PIN) qui correspondent à une représentation bijective des données d'identification (PIN) pouvant ainsi être générées à partir des deuxièmes éléments, les deuxièmes éléments étant différents des premiers éléments et l'association de la deuxième quantité de données à la première quantité de données étant formée à nouveau au moyen d'une association pseudo-aléatoire des deuxièmes éléments (A, B, C, ... J) aux premiers éléments (0, 1, 2, 3, ... 9) avant chaque exécution d'une nouvelle transaction, une permutation des premiers éléments (0, 1, 2, 3, ... 9) étant générée et envoyée au terminal en libre service (ATM) par la première unité assistée par ordinateur (PINSRV) ;
l'association univoque des deuxièmes éléments (A, B, C, ... J) aux premiers éléments (0, 1, 2, 3, ... 9) est affichée sur un écran (DISP) qui est relié constructivement au terminal en libre service (ATM) (étape 107) ;
les deuxièmes éléments (A, B, C, ... J) et non les premiers éléments (0, 1, 2, 3, ... 9) sont affichés sur un terminal d'utilisateur mobile (MD), lequel est constructivement séparé du terminal en libre service (ATM), lequel est relié par le biais de canaux sécurisés d'une liaison de communication mobile à la deuxième unité assistée par ordinateur (SRV), par un programme d'application mis en oeuvre sur le terminal d'utilisateur mobile (étape 108) ;
les données de saisie (#PIN) sont saisies par l'utilisateur (CSM) sur le terminal d'utilisateur mobile (MD) (étape 109) ; et
les données de saisie (#PIN), lesquelles sont générées à partir des deuxièmes éléments, sont transmises au moyen du programme d'application (MBA) aux unités assistées par ordinateur (PINSRV ; SRV) reliées au terminal en libre service (ATM) par le biais des canaux de réseau sécurisés (étape 110), la deuxième unité assistée par ordinateur (SRV) effectuant l'authentification de la transaction et la première unité assistée par ordinateur (PINSRV), laquelle gère l'association univoque des deuxièmes éléments (A, B, C, ... J) aux premiers éléments (0, 1, 2, 3, ... 9), contrôlant les données de saisie (#PIN) (étape 111).

2. Procédé (100) selon la revendication 1, **caractérisé en ce que** les deuxièmes éléments comprennent les composants d'un schéma pouvant être prédéfini, lesquels sont des symboles, notamment des lettres (A, B, C, ... J) d'un alphabet, des niveaux de gris d'une échelle de gris, des couleurs d'une échelle de couleurs et/ou des positions d'un schéma de positions.

3. Procédé (100) selon l'une des revendications précédentes, **caractérisé en ce que** le terminal d'utilisateur mobile est un Smartphone (MD) pourvu d'un écran tactile, **en ce que** les deuxièmes éléments, notamment sous la forme de symboles (A, B, C, ... J) du schéma prédéfini, sont affichés à l'écran (étape 107) et **en ce que** les données de saisie (#PIN) sont saisies par l'utilisateur (CSM) sur l'écran tactile (étape 108).

4. Procédé (100) selon l'une des revendications précédentes, **caractérisé en ce que** le terminal d'utilisateur mobile (MD) possède une caméra et **en ce qu'**avant l'exécution de la transaction, un contrôle est effectué pour vérifier si le terminal d'utilisateur mobile (MD) se trouve à proximité du terminal en libre service (ATM), un code graphique, notamment un code à barres, étant affiché sur l'écran (DISP) (étape 104) ; le code graphique étant capté, notamment analysé par la caméra du terminal d'utilisateur (MD) (étape 105) ; et des données caractéristiques du code graphique capté étant transmises par le terminal d'utilisateur (MD) aux plusieurs unités assistées par ordinateur (PINSRV, SRV) reliées au terminal en libre service (ATM), lesquelles gèrent les données caractéristiques du code graphique et effectuent la vérification.

5. Système d'authentification et d'exécution d'une transaction sur un terminal en libre service (ATM) du système, le système comprenant, pour l'authentification de la transaction au moyen de la saisie sécurisée de données d'identification (PIN) d'un utilisateur (CSM) du terminal en libre service (ATM), plusieurs unités assistées par ordinateur (PINSRV, SRV) reliées au terminal en libre service (ATM) par le biais de canaux de réseau sécurisés, les plusieurs unités assistées par ordinateur (PINSRV, SRV) comprenant au moins une première unité assistée par ordinateur (PINSRV) et une deuxième unité assistée par ordinateur (SRV), **caractérisé par** les composants de système suivants :
la première unité assistée par ordinateur (PINSRV) qui, pour une première quantité de données comprenant des premiers éléments, lesquels incluent les valeurs de touche (0, 1, 2, 3, ... 9) d'un clavier numérique, à partir desquelles sont formées les données d'identification (PIN), forme une deuxième quantité de données comprenant des deuxièmes éléments, lesquels englobent les composants (A, B, C, ... J) d'un schéma pouvant être prédéfini, lesquels sont respectivement associés de manière univoque à l'un des premiers éléments (0, 1, 2, 3, ... 9), des données de saisie (#PIN) qui correspondent à une représentation bijective des données d'identification (PIN) pouvant ainsi être générées à partir des deuxièmes éléments, les deuxièmes éléments étant différents des premiers éléments et l'association de la deuxième quantité de données à la première quantité de données étant formée à nouveau au moyen d'une association pseudo-aléatoire des deuxièmes éléments (A, B, C, ... J) aux premiers éléments (0, 1, 2, 3, ... 9) avant chaque exécution d'une nouvelle transaction, la première unité assistée par ordinateur (PINSRV) générant une permutation des premiers éléments (0, 1, 2, 3, ... 9) et l'envoyant au terminal en libre service (ATM) ;
un écran (DISP), qui est relié constructivement au terminal en libre service (ATM) et qui affiche l'association univoque des deuxièmes éléments (A, B, C, ... J) aux premiers éléments (0, 1, 2, 3, ... 9) ;
un terminal d'utilisateur mobile (MD), lequel est constructivement séparé du terminal en libre service (ATM), lequel est relié par le biais de canaux sécurisés d'une liaison de communication mobile à la deuxième unité assistée par ordinateur (SRV), et lequel est associé à l'utilisateur (CSM) du terminal en libre service (ATM) et affiche les deuxièmes éléments (A, B, C, ... J) et non les premiers éléments (0, 1, 2, 3, ... 9) par un programme d'application (MBA) afin de permettre à l'utilisateur (CSM) de saisir les données de saisie (#PIN) sur le terminal d'utilisateur (MD) ;
le programme d'application (MBA) étant mis en oeuvre sur le terminal d'utilisateur mobile (MD) et le programme d'application (MBA) transmettant aux unités assistées par ordinateur (PINSRV ; SRV) les données de saisie (#PIN) qui sont générées à partir des deuxièmes éléments, la deuxième unité assistée par ordinateur (SRV) effectuant l'authentification de la transaction et la première unité assistée par ordinateur (PINSRV), laquelle gère l'association univoque des deuxièmes éléments (A, B, C, ... J) aux premiers éléments (0, 1, 2, 3, ... 9), contrôlant les données de saisie (#PIN).

6. Système selon la revendication 5, **caractérisé en ce que** le terminal en libre service est un guichet automatique de banque (ATM), notamment un guichet automatique de banque (ATM) qui ne possède aucun clavier pour la saisie des données d'identification (PIN).

7. Système selon la revendication 5 ou 6, **caractérisé en ce que** le terminal d'utilisateur mobile est un Smartphone (MD) pourvu d'un écran tactile, lequel affiche les deuxièmes éléments (A, B, C, ... J) conformément au schéma prédéfini sur l'écran tactile afin de permettre à l'utilisateur (CSM) de saisir les données de saisie (#PIN) sur l'écran tactile à la place des données d'identification (PIN).

8. Système selon la revendication 5 à 7, **caractérisé en ce que** le terminal d'utilisateur (MD) possède une caméra et **en ce que** pour vérifier si le terminal d'utilisateur (MD) se trouve à proximité du terminal en libre service (ATM), l'écran (DISP) du terminal en libre service (ATM) affiche un code graphique, notamment un code à barres ; **en ce que** la caméra du terminal d'utilisateur (MD) capte le code graphique, notamment l'analyse ; et **en ce que** le terminal d'utilisateur (MD) transmet des données caractéristiques du code graphique capté aux plusieurs unités assistées par ordinateur (PINSRV, SRV) reliées au terminal en libre service (ATM), lesquelles effectuent la vérification et gèrent les données caractéristiques du code graphique.
